# FASCICULE DE BREVET EUROPEEN

(11) **EP 2 556 174 B1**
(45) Date de publication et mention de la délivrance du brevet: **27.06.2018**
(21) Numéro de dépôt: 11718459.8
(22) Date de dépôt: 06.04.2011
(51) Int. Cl.: C21D 1/09, C21D 1/10, C21D 7/06, C21D 9/00, G21C 1/09, G21C 17/017, H05B 3/82, H05B 3/42

(54) **TRAITEMENT D'UNE CANNE CHAUFFANTE DESTINEE A UN PRESSURISEUR DU CIRCUIT PRIMAIRE D'UN REACTEUR NUCLEAIRE**
BEHANDLUNG EINES HEIZLEITERROHRS FÜR EINEN DRUCKERHÖHER DES PRIMÄRKÜHLSYSTEMS EINES KERNREAKTORS
TREATMENT OF A HEATER TUBE INTENDED FOR A PRESSURIZER OF THE PRIMARY COOLING SYSTEM OF A NUCLEAR REACTOR

(30) Priorité: 08.04.2010 FR 1052651
(43) Date de publication de la demande: 13.02.2013
(73) Titulaire: Electricité de France, 75008 Paris (FR)
(72) Inventeur: CHAMPREDONDE, Jacques, F-92160 Antony (FR); FAGEON, Jean-Marie, F-95800 Cergy (FR); NEAU, Yves, F-77690 Montigny sur Loing (FR)
(74) Mandataire: Cabinet Plasseraud
(86) Numéro de dépôt international: PCT/FR2011/050775
(87) Numéro de publication internationale: WO 2011/124846

(56) Documents cités:
- FR-A1- 2 895 206
- US-A1- 2009 141 850
- DATABASE WPI Week 200570 Thomson Scientific, London, GB; AN 2005-679374 XP002611866, -& JP 2005 265449 A (TOSHIBA KK) 29 septembre 2005 (2005-09-29)

## Description

### Domaine de l'invention

L'invention concerne les cannes chauffantes pour un pressuriseur d'un circuit primaire de réacteur nucléaire à eau sous pression.

### Etat de la technique

Une canne chauffante, pour un tel pressuriseur de circuit primaire, comprend habituellement une enveloppe externe métallique de forme cylindrique allongée (par exemple de 22 mm de diamètre sur 2 m environ de long) dite « gaine », et un organe de chauffage monté à l'intérieur de la gaine.

De telles cannes sont montées sur une partie inférieure du pressuriseur, comme expliqué en détails dans le document FR-2 895 206, et sont immergées dans l'eau du circuit primaire que comporte le pressuriseur. Elles sont mises en service pour augmenter la pression de fonctionnement du circuit primaire. On comprendra ainsi que les cannes sont sollicitées en service et subissent en particulier une contrainte thermique qui, associée à une contrainte d'écrouissage décrite plus loin, provoque potentiellement une corrosion sous contrainte.

Le document JP 2005 265449 propose un traitement de recristallisation de surface par induction de matériaux métalliques d'un réacteur nucléaire.

### Problèmes posés

En effet, des incidents ont révélé que des fuites pouvaient se produire sur les cannes chauffantes de l'état de la technique. En particulier, la gaine d'une canne peut se fissurer, de telle sorte que l'intérieur de la canne est mis en communication avec l'eau qui se trouve dans le pressuriseur. Il s'ensuit une détérioration possible de l'organe de chauffage de la canne, la perte de fonctionnement de la canne, voire la fuite de l'eau sous pression vers l'extérieur du pressuriseur, à travers l'espace intérieur de la canne.

Par conséquent, il est recherché une solution pour limiter les risques de fissures de la gaine, dus en particulier à la corrosion sous contrainte que subit la gaine.

Il a été proposé dans le document précité FR-2 895 206 une solution visant à déposer par électrolyse un revêtement de protection en nickel sur la surface extérieure de la gaine. Toutefois, cette solution d'ajout de matière conduit à une modification de la géométrie de la canne), en particulier par augmentation du diamètre de la canne. Cette solution n'est de plus pas totalement sûre, un risque d'élimination de la couche de nickel sous l'effet de chocs ou de frottement n'étant pas exclu. Compte tenu de l'augmentation du diamètre, cette solution n'est pas applicable sur des cannes chauffantes déjà fabriquées qui pourraient ne plus se conformer à des dimensions des supports. De plus, elle est longue à mettre en oeuvre.

La présente invention vient améliorer la situation.

### Présentation générale de l'invention

Elle propose à cet effet un traitement des cannes en vue de diminuer les risques de fissures précités. Le traitement prévu au sens de l'invention est, de manière générale, un traitement thermique des cannes pour recristalliser au moins la surface externe de la gaine.

Ainsi, la présente invention vise un procédé de traitement d'une canne chauffante destinée à être mise en service dans un pressuriseur du circuit primaire d'un réacteur nucléaire. La canne chauffante comporte un organe de chauffage logé dans une gaine sensiblement cylindrique. Cette gaine comporte une surface extérieure susceptible de subir, au moins en partie, une corrosion sous contrainte, pendant la mise en service de la canne.

En particulier, la gaine comportant un matériau de type acier, par exemple de type acier inoxydable austénitique écroui, le procédé au sens de l'invention comporte une étape de traitement thermique de la surface externe au moins de la gaine, pour recristalliser au moins en superficie le matériau de la gaine.

Le matériau ainsi recristallisé n'est pas sensible au phénomène de corrosion sous contrainte par rapport aux cannes de l'état de l'art, sans se détériorer, ce qui supprime les risques de fissures et finalement augmente la durée de vie des cannes.

Préférentiellement, le traitement thermique est un traitement de chauffage par induction appliqué à partir de la surface externe de la gaine.

On vise en particulier un traitement thermique comportant une élévation en température à la surface extérieure de la gaine comprise dans une gamme de 800°C à 1100°C et préférentiellement entre 900°C et 1050°C ou entre 950°C et 1050°C, par exemple 960°C, 970°C ou même 1000°C.

En appliquant un traitement thermique par induction, l'élévation de température de l'organe de chauffage résultant du traitement thermique est avantageusement limitée à une valeur maximale de 900°C, ce qui permet de conserver les propriétés résistives et d'isolement électrique de l'organe de chauffage.

Dans un exemple de réalisation décrit en détails ci-après, le traitement de chauffage par induction consiste à appliquer un courant alternatif dans le bobinage d'un inducteur entourant la surface extérieure de la gaine. La fréquence du courant alternatif peut être choisie et préférentiellement elle est d'au moins 100 kHz. Plus la fréquence est élevée et plus l'énergie transmise à la gaine par induction est concentrée sur une faible épaisseur de la gaine selon un effet dit « de peau ». Cette valeur de fréquence est donnée dans un contexte où le bobinage d'induction a un diamètre de 30 à 50 mm et pour une gaine dont le diamètre est de l'ordre de 20 à 25 mm.

L'inducteur est disposé autour de la canne et, en particulier, un déplacement relatif de l'inducteur par rapport à la canne est préférentiellement appliqué, au moins en translation le long de la canne.

Dans un exemple de réalisation, la vitesse du déplacement en translation est comprise entre 100 et 900 mm par minute, pour une puissance injectée par induction comprise entre 1 et 50 kW.

Préférentiellement, l'inducteur est du type solénoïdal.

Dans un mode de réalisation, on peut prévoir en outre une injection de gaz inerte sur la surface externe de la gaine pour éviter une oxydation suite au traitement thermique.

Après le traitement thermique, on peut appliquer aussi un refroidissement par soufflerie de fluide (par exemple de l'air) sur la surface extérieure de la gaine.

La présente invention vise aussi une canne chauffante, en tant que telle, obtenue par le procédé au sens de l'invention. En particulier, la gaine de la canne comporte au moins en sa surface extérieure une épaisseur de matériau recristallisé. Cette épaisseur est préférentiellement supérieure ou de l'ordre de 1 mm. Cette épaisseur est avantageusement comprise entre environ 1 mm et une épaisseur totale de la gaine de la canne, et plus particulièrement comprise entre environ 1,5 mm et environ 3 mm, par exemple environ 2 mm.

On entend ici par « matériau recristallisé » le fait que le traitement thermique appliqué contribue à régénérer des grains fortement déformés, à dureté élevée, en des grains équi-axes de dureté faible ou moyenne. Ainsi, une trace du procédé de l'invention sur la canne consiste en ce que la dureté de la gaine en sa superficie externe est plus faible que pour une canne classique de l'état de l'art. Typiquement, une dureté équivalente à une valeur inférieure ou égale à environ 240 Vickers voire inférieure à environ 200 Vickers peut être mesurée sur la surface extérieure de la gaine d'une canne traitée au sens de l'invention. Ces valeurs de dureté représentent respectivement des épaisseurs de matériau recristallisé supérieure ou de l'ordre de 1 mm ou d'environ 1,5 mm à 2 mm.

Comme expliqué ci-après, initialement, l'organe de chauffage est monté dans la gaine de la canne par sertissage, la surface externe de la gaine étant martelée. Il s'en suit un écrouissage de la surface externe de la gaine. Comme on le verra ci-après, il existe un effet synergique entre l'écrouissage et le traitement thermique au sens de l'invention.

Il pourra être observé alors sur une canne, avant le traitement thermique au sens de l'invention, des traces d'écrouissage par martelage en particulier sur la surface extérieure de la gaine. Avantageusement, les conséquences de cet écrouissage (notamment en termes de tenue à la corrosion sous contrainte) disparaissent globalement après le traitement de l'invention.

### Avantages apportés par l'invention

Ainsi, le traitement thermique choisi au sens de l'invention est préférentiellement un traitement par induction, en visant à favoriser une recristallisation du matériau dans lequel est réalisée la gaine, en particulier à la surface externe de la gaine. A titre d'exemple non limitatif, ce matériau de la gaine peut être typiquement un acier austénitique (comportant essentiellement du fer, 16 à 20% de chrome et 8 à 14% de nickel, ainsi que du carbone (moins de 1%) et éventuellement du molybdène, du niobium ou du titane).

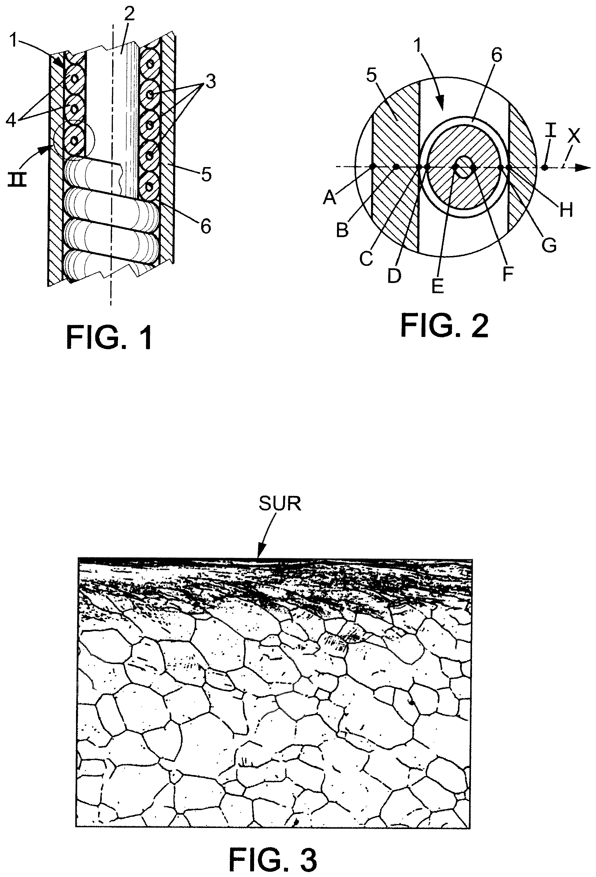

Il a été en effet observé que le risque de corrosion de la gaine d'une canne peut être lié à son mode de fabrication par martelage, provoquant un écrouissage important du métal, en particulier à la surface extérieure de la gaine. On a représenté sur la figure 3 une observation agrandie de la surface SUR de la gaine d'une canne, montrant en particulier des grains très écrouis à proximité de la surface externe SUR de la gaine.

Pour cette première raison, un traitement thermique par induction est avantageux car, en principe, il favorise d'abord une élévation de température en particulier à la surface externe du matériau traité par induction.

Le traitement par induction est avantageux aussi au moins pour une deuxième raison : il est suspecté qu'un traitement thermique global (à environ 1050°C pour recristalliser la gaine d'une canne) puisse détériorer les propriétés électriques de la canne et notamment de l'organe de chauffage monté à l'intérieur de la gaine. Par conséquent, un traitement thermique de surface seulement de la canne, et en particulier de la gaine, sélectivement, est préféré dans une mise en oeuvre de l'invention. Un traitement thermique par induction est donc adéquat. Lorsque la température de l'organe de chauffage est supérieure à 900°C, il est en effet suspecté que les propriétés électriques puissent être détériorées.

Ainsi, un traitement par induction, avantageusement de la surface de la gaine, permet d'améliorer les défauts de morphologie (plastification importante, dislocations et contraintes locales) à la surface de la gaine, liés notamment à l'écrouissage de la gaine lors de la fabrication de la canne.

De plus, lorsque le traitement thermique est effectué au moyen d'un solénoïde entourant la canne, le traitement thermique de recristallisation peut être mis en oeuvre sans créer de discontinuité de traitement thermique.

Axialement, un traitement continu et régulier peut être obtenu en déplaçant continûment et de façon régulière la canne dans l'inducteur, ou inversement.

Radialement, le traitement thermique a lieu simultanément sur tout le pourtour de la gaine avec une intensité sensiblement égale. Les risques de former une non-uniformité radiale de contraintes lors du traitement de recristallisation sont donc faibles.

En particulier, les contraintes dues à l'écrouissage de la gaine lors de la fabrication des cannes sont résorbées uniformément sur le pourtour de la canne.

Une non-uniformité de contraintes pourrait arriver si, lors du traitement thermique de surface, certaines zones de la gaine plus fortement écrouies subissent un traitement de recristallisation moindre que d'autres zones de la gaine de la canne plus faiblement écrouies. Une non-uniformité radiale de contraintes crée d'un côté de la canne des zones à fortes contraintes et d'un autre côté de la canne des zones à faibles contraintes, ce qui pourrait contribuer à fléchir la canne.

Par ailleurs, l'énergie (donc la température) à apporter pour recristalliser un acier écroui est plus faible que pour un acier non écroui. Par exemple, alors qu'un acier non écroui présente un début de recristallisation à 1050°C, le même acier écroui superficiellement ne nécessite qu'une élévation de température plus basse, par exemple de 960°C en considérant par ailleurs que toute la surface de cet acier n'est pas écrouie et que l'écrouissage n'est pas homogène sur toute l'épaisseur de la gaine. Ce constat permet alors d'abaisser la température à appliquer à la gaine pour sa recristallisation et donc d'abaisser aussi la température que doit subir l'organe de chauffage à l'intérieur de la gaine.

L'usage d'une température de surface comprise entre 900°C et 1050°C ou plus particulièrement entre 950°C et 1050°C, par exemple 960°C, 970°C ou même 1000°C permet d'assurer une recristallisation de surface lorsque la surface de la gaine comporte des zones plus faiblement écrouies que d'autres zones. En particulier, ces températures de surface permettent de recristalliser des parties de la gaine moins écrouies que la surface externe, par exemple des zones plus au coeur.

Ainsi que mentionné précédemment, il existe un effet synergique entre l'écrouissage et le traitement thermique au sens de l'invention. En particulier, l'écrouissage initialement présent permet d'abaisser la température du traitement. En outre, le traitement selon l'invention permet de pallier des défauts de la fabrication des cannes par écrouissage. Le traitement thermique selon l'invention permet de résorber une majorité des contraintes présentes dans la gaine, y compris des contraintes résiduelles apportées par l'écrouissage et présentes en profondeur de la gaine, sous la surface externe.

En effet, lorsque le traitement de recristallisation est effectué sur une épaisseur de l'ordre de celles mentionnées ci-dessus, en particulier environ 1,5 mm ou environ 2 mm, une majorité de l'épaisseur de la gaine est traitée. Une majorité des contraintes apportées dans la gaine par écrouissage lors de la fabrication de la canne sont alors résorbées. La surface externe de la gaine ne subit donc qu'une contrainte minimale de la part de couches plus internes de la gaine.

En résorbant les contraintes dues à l'écrouissage de la gaine, le procédé selon l'invention permet de réduire les contraintes présentes globalement dans la canne à des valeurs inférieures à environ 100 MPa, voire inférieures à environ 80 MPa. Ainsi, les contraintes globalement présentes dans la canne sont notablement inférieures aux contraintes limites à partir desquelles une corrosion sous contrainte peut avoir lieu en utilisation, soit, pour des cannes ayant une gaine en aciers austénitique, des contraintes de l'ordre de 300 MPa à 400 MPa.

### Brève description des dessins

D'autres avantages et caractéristiques de l'invention apparaîtront à la lecture de la description détaillée ci-après d'exemples de réalisation non limitatifs, ainsi qu'à l'examen des dessins annexés sur lesquels :
- la figure 1 représente une vue en coupe d'une canne, montrant en particulier l'intérieur d'une canne au sens de l'invention ;
- la figure 2 représente un détail de la figure 1, avec en particulier différents points en lesquels la température liée au traitement par induction est estimée selon les graphes des figures 4 et 5 ;
- la figure 3 représente une observation en microscopie de la surface de la gaine d'une canne ;
- la figure 4 est un graphe d'estimation du profil de températures en fonction du temps en différents points de la canne dont le détail est représenté sur la figure 2, dans des conditions de traitement par induction à une fréquence de 300 kHz, avec un inducteur à deux spires de 2000 ampères et un arrêt de chauffage à 4,6 secondes, sans maintien ;
- la figure 5 est un graphe d'estimation du profil de températures en différents points de la canne dont le détail est représenté sur la figure 2, dans des conditions de traitement par induction à une fréquence de 200 kHz, avec un inducteur à deux spires de 3000 ampères et sans maintien ;
- la figure 6 représente très schématiquement une installation pour la mise en oeuvre du procédé.

### Description d'exemples de réalisation

On se réfère tout d'abord à la figure 1 sur laquelle on a représenté la partie de la canne destinée à être immergée dans un pressuriseur. Elle comporte alors une gaine 5 de forme cylindrique, en acier inoxydable. On comprendra ainsi que le procédé s'applique à toute canne dont la gaine est réalisée dans la famille générale des « aciers inoxydables » (sans limitation particulière de la proportion d'alliages formant cet acier).

L'âme centrale de la canne comporte un mandrin 2, habituellement en cuivre, à l'intérieur de la gaine 5, selon l'axe central de la gaine, ainsi qu'un fil chauffant 1 enroulé autour du mandrin 2 en spirale et interposé entre le mandrin 2 et la gaine 5. Ce fil chauffant constitue l'organe de chauffage précité dans la présentation générale de l'invention ci-avant.

Le fil chauffant 1 comprend une âme métallique résistive, électriquement conductrice 3, par exemple en cuivre ou en alliage nickel-chrome. Un enrobage métallique de protection en acier 6 (voir en particulier le détail de la figure 2) entoure l'âme 3. L'enrobage 6 est isolé électriquement de l'âme 3 par un isolant 4 par exemple de la magnésie (MgO). Le fil chauffant 1, enroulé autour du mandrin 2 en formant des spires jointives, est destiné à être raccordé à un connecteur relié électriquement à un générateur électrique faisant circuler un courant électrique dans le fil conducteur 1. Des détails sur la connexion d'une telle canne chauffante et sa mise en oeuvre dans le circuit primaire d'un réacteur nucléaire sont décrits dans la publication FR-2 895 206.

En référence maintenant à la figure 2, l'épaisseur de la gaine 5 (entre les points A et C) est, dans un exemple de réalisation aucunement limitatif, de 2,45 mm. L'épaisseur de l'enrobage de protection 6 du fil chauffant 1 est de 0,5 mm (entre les points C et D de la figure 2). L'épaisseur de la garniture de magnésie 4 est de 0,4 mm (entre les points D et E de la figure 2). Ainsi, on comprendra que la représentation des figures 1 et 2 n'est pas nécessairement à l'échelle. Enfin, le diamètre de l'âme conductrice 3 du fil chauffant est d'environ 1,5 mm (entre les points E et F).

Par ailleurs, les éléments qu'enveloppe la gaine 5 sont sertis dans la gaine selon une étape de rétreint de la gaine par martelage, qui génère d'ailleurs la contrainte mécanique susceptible d'affecter la tenue à la corrosion sous contrainte. Après rétreint, la gaine 5 est en contact serré avec les spires 1 de l'élément chauffant, comme illustré notamment sur la figure 2.

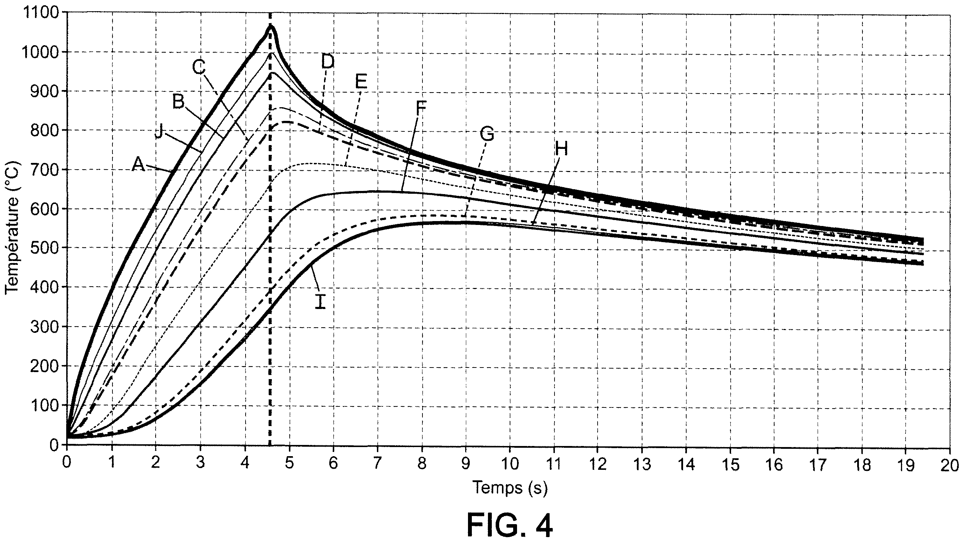

Selon une première série d'essais réalisés, il a été recherché une élévation de température d'environ 1050°C de la surface extérieure de la gaine 5, en vue de sa recristallisation. En référence à la figure 4, il a été estimé que la surface externe de la gaine (courbe A) présentait un pic d'élévation en température de 1050°C, favorable à la recristallisation. Au point J, correspondant à environ 83% de la puissance reçue par induction (« effet de peau » connu dans le traitement par induction), l'élévation de température est d'environ 1000°C. En particulier, la courbe B montre le profil de température à 1,5 mm de la surface extérieure de la gaine (au point B de la figure 2). Or, il s'est avéré qu'une élévation de température simplement à 900°C permettait déjà une recristallisation du matériau de la gaine. Ainsi, cette première série d'essais a permis de recristalliser pratiquement l'intégralité de la gaine, y compris en volume. On observe néanmoins, sur la courbe portant la référence E, que la température de l'âme 3 du fil chauffant n'excède pas 800°C, ce qui permet de préserver les propriétés conductrices de l'âme 3 du fil chauffant, en garantissant alors que le traitement au sens de l'invention n'apporte aucune détérioration du contenu de la canne.

Globalement, il est recherché une élévation de température de la surface extérieure de la gaine dans une gamme de 800°C à 1100°C, et préférentiellement de 900°C à 1050°C, gamme de températures suffisante pour recristalliser le matériau de la gaine. A cette contrainte s'ajoute une élévation de température maximale de la magnésie 4 limitée à 850°C (au point D de la figure 2), pour garantir une élévation de température inférieure de l'âme 3 du fil chauffant.

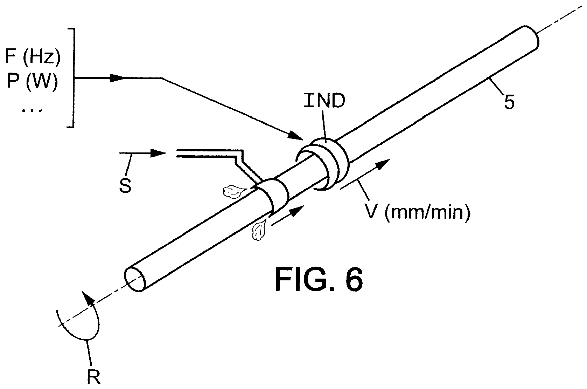

Pour respecter ces contraintes, on choisit avantageusement un ensemble de paramètres de l'induction parmi au moins :
- la fréquence f(Hz) du courant alternatif circulant dans les spires de l'inducteur (référence IND de la figure 6), étant entendu que plus cette fréquence est élevée et plus l'énergie reçue par induction est confinée en superficie de la gaine 5 (par effet de peau),
- la puissance P (W) ou de façon équivalente l'ampérage du courant pour la fréquence choisie,
- la durée d'application du traitement thermique, représentée dans l'exemple de la figure 6 par une vitesse V(mm/min) de déplacement relatif de l'inducteur IND par rapport à la gaine 5 de la canne.

Bien entendu, plus la vitesse de l'inducteur par rapport à la canne est basse, et plus l'élévation en température est élevée.

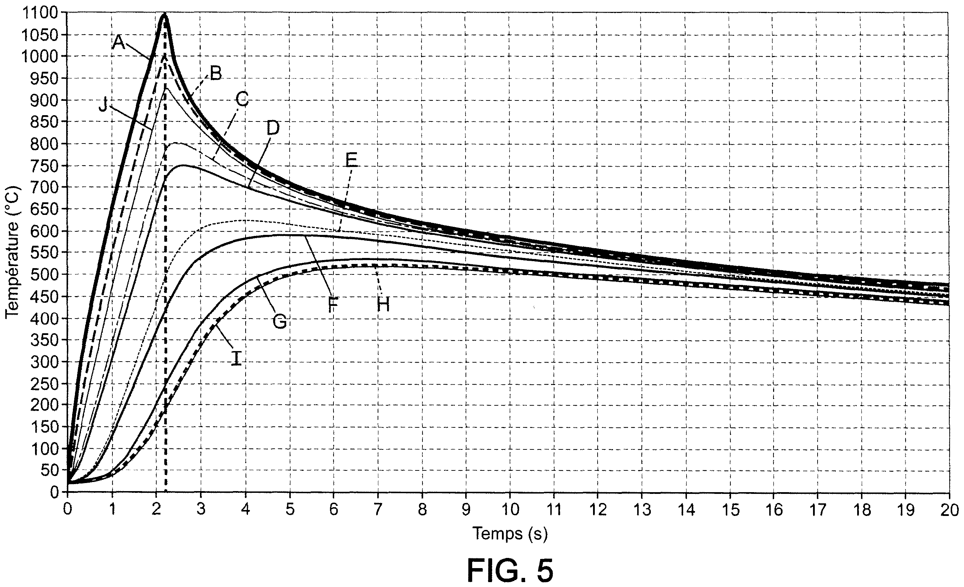

On relève alors ces différents effets sur la figure 5 qui représente une estimation des élévations en température pour une vitesse de défilement plus élevée, mais avec une densité de puissance plus élevée. On relèvera ici que l'interface entre l'enrobage de protection du fil chauffant et la magnésie (point D) subit une élévation de température inférieure à 750°C.

Selon l'ensemble des essais réalisés, il s'avère que la fréquence du courant alternatif à prévoir est préférentiellement supérieure à 150 kHz, de manière à préserver la magnésie 4 et/ou l'âme conductrice 3 du fil chauffant 1, en limitant l'élévation de température à une valeur seuil de l'ordre de 800 à 900°C. La puissance injectée peut être dans une gamme de 1 à 50 kW. La vitesse du mouvement relatif de l'inducteur IND par rapport à la canne peut être comprise dans une gamme de 100 à 900 mm/min. Dans ces conditions, il est préférable de prévoir un inducteur solénoïdal, ayant un diamètre interne de 30 à 50 mm, étant entendu que le diamètre de la canne est, dans un exemple de réalisation donné, de 22 mm.

Préférentiellement, comme représenté sur la figure 6, la canne, pendant le traitement thermique, est mise en rotation (flèche R) autour de son axe central pour homogénéiser le traitement thermique appliqué à la gaine.

Bien entendu, les paramètres du traitement par induction tels que, notamment, la fréquence, la puissance, la vitesse de défilement sont réglables dans l'installation de traitement représentée sur la figure 6 en fonction des dimensions précises des éléments constituant la canne, en fonction de leur matériau, ou autres contraintes. On comprendra, de façon générale, que l'effet recherché dans le traitement par induction est de créer un champ magnétique alternatif (à l'aide de courants alternatifs circulant dans l'inducteur) pour générer des courants induits à la surface externe de la gaine de la canne. Ces courants induits chauffent instantanément la zone où ils se produisent. En revanche, les éléments intérieurs de la canne tels que la surface interne de la gaine, et en particulier le fil chauffant 1 et le mandrin 2 ne sont, en principe, chauffés que par conduction thermique (comme l'illustrent bien les courbes E à I des figures 4 et 5). On comprendra ainsi que l'épaisseur de traitement est finalement fonction de la valeur de la fréquence choisie (pour l'effet de peau) et du temps de traitement, ou de manière équivalente de la vitesse de défilement de l'inducteur par rapport à la canne (par conduction thermique).

Il s'ensuit alors une recristallisation de la surface externe, au moins, de la gaine 5 de la canne. Cette recristallisation se constate notamment par le fait que le matériau devient plus mou lorsqu'il est recristallisé. On peut mesurer typiquement une dureté inférieure ou égale à environ 240 Vickers par une mesure de pénétration par un diamant conique à une pression de 5 kg sur la surface externe de la gaine 5 d'une canne traitée par le procédé au sens de l'invention. L'épaisseur de la gaine recristallisée est d'au moins 1 mm.

Ainsi, on comprendra qu'une trace du procédé au sens de l'invention sur la canne traitée consiste à mesurer une dureté inférieure ou égale à environ 240 Vickers, par exemple sur au moins 1 mm d'épaisseur à compter de la surface extérieure de la gaine 5 de la canne.

On a représenté sur la figure 6 une soufflerie S de fluide sur la canne, immédiatement après le traitement par induction. On peut prévoir en effet un refroidissement (par exemple par de l'air) pour diminuer la température des éléments constituant la canne, après recristallisation de la gaine. On abaisse ainsi la température dans les fins de courbe, tel que représenté sur les figures 4 et 5.

On peut prévoir aussi de protéger de l'oxydation (après élévation en température) la canne par la mise en place d'un moufle (manchon en quartz autour de la canne) et pour injecter un gaz inerte (par exemple, de l'argon, de l'hélium, ou possiblement de l'azote). Ce moufle injectant un gaz inerte (non représenté sur la figure 6) peut intervenir entre l'inducteur IND et la soufflerie d'air S dans le schéma représenté.

En variante, le traitement thermique peut être réalisé dans un coffret sous atmosphère d'un gaz inerte pour éviter l'oxydation superficielle de la gaine.

De manière plus générale, la présente invention ne se limite pas aux exemples de réalisation donnés ci-avant ; elle s'étend à d'autres variantes.

Ainsi, la soufflerie d'air S représentée sur la figure 6 pour le refroidissement de la canne peut être simplement supprimée.

En outre, l'application de gaz inerte sur la gaine est aussi optionnelle. En effet, du fait de la faible durée de traitement, l'oxydation possible de la canne reste limitée. On observe tout au plus un léger bleuissement de la surface extérieure de la gaine 5. Cette oxydation peut simplement être supprimée par un décapage final (étape déjà prévue et mise en oeuvre dans le procédé de fabrication général des cannes). Lors de cette étape de décapage, la faible couche d'oxydation formée par le traitement par induction est éliminée, ce qui permet d'éviter de prévoir une soufflerie de gaz inerte ou d'appliquer le traitement thermique dans une chambre de gaz inerte comme décrit ci-avant.

Par ailleurs, comme indiqué ci-avant, les valeurs d'élévation en température données dans les exemples des figures 4 et 5 admettent de nombreuses variantes. De manière générale, on peut retenir que la recristallisation de la gaine pouvant s'effectuer entre 800 et 1100°C, les conditions de traitement par induction visent à élever d'autant la température de la surface extérieure de la gaine, en cherchant à limiter l'élévation en température du fil chauffant à environ 900°C au maximum. Par ailleurs, il est préférable aussi que l'élévation de température de la surface extérieure de la gaine n'excède pas une valeur seuil, par exemple supérieure à 1100°C, ou que la durée du traitement thermique soit limitée aussi à une valeur seuil, pour ne pas favoriser ce qui est appelé « recristallisation secondaire » et qui globalement se traduit par une inhomogénéité des tailles de grains cristallins, fragilisant le matériau.

En outre, comme expliqué ci-avant, si la surface extérieure de la gaine est globalement écrouie, l'élévation de température au maximum en surface de la gaine (pic de la courbe A de la figure 4 ou 5) peut être abaissée en-dessous de 1000°C, par exemple à 960°C.

Plus généralement, on a décrit ci-avant à titre d'exemple un traitement thermique par induction mais l'invention s'applique à tout type de traitement thermique capable de limiter sélectivement l'élévation de température à la gaine de la canne principalement. Par exemple, un chauffage par balayage laser ou par chalumeau annulaire sur la surface de la gaine peut être envisagé. Le traitement par chalumeau annulaire reproduisant un traitement thermique ayant des avantages similaires à ceux d'un traitement par solénoïde de révolution est particulièrement avantageux.

## Revendications

1. Procédé de traitement d'une canne chauffante destinée à être mise en service dans un pressuriseur du circuit primaire d'un réacteur nucléaire,
la canne chauffante comportant un organe de chauffage (1) logé dans une gaine (5) sensiblement cylindrique,
ladite gaine comportant une surface extérieure susceptible de subir, au moins en partie, une corrosion sous contrainte, pendant la mise en service de la canne,
ladite gaine comportant un matériau de type acier,
**caractérisé en ce que** le procédé comporte une étape de traitement thermique de la surface externe au moins de ladite gaine pour recristalliser au moins en superficie le matériau de la gaine,
et **en ce que** la surface extérieure de la gaine présente au moins des traces d'écrouissage avant l'étape de traitement thermique,
et **en ce que** l'élévation de température de l'organe de chauffage résultant du traitement thermique est limitée à une valeur maximale de 900°C.

2. Procédé selon la revendication 1, **caractérisé en ce que** le traitement thermique est un traitement de chauffage par induction appliqué à partir de la surface externe de la gaine.

3. Procédé selon la revendication 2, **caractérisé en ce que** le traitement thermique comporte une élévation en température à la surface extérieure de la gaine comprise dans une gamme de 900°C à 1050°C.

4. Procédé selon la des revendication 3, **caractérisé en ce qu'**une fréquence de courant alternatif appliqué dans un bobinage inducteur pour le traitement de recristallisation par induction est d'au moins 100 kHz, pour un bobinage de 30 à 50 mm de diamètre entourant la surface extérieure de la gaine, le diamètre de la gaine étant de l'ordre de 20 à 25 mm.

5. Procédé selon l'une des revendications 3 à 4, **caractérisé en ce qu'**un inducteur (IND) est disposé autour de la canne, et **en ce qu'**un déplacement relatif de l'inducteur par rapport à la canne est appliqué, au moins en translation le long de la canne.

6. Procédé selon la revendication 5, **caractérisé en ce que** la vitesse du déplacement en translation est comprise entre 100 et 900 mm par minute, pour une puissance injectée par induction comprise entre 1 et 50 kW.

7. Procédé selon l'une des revendications 2 à 6, **caractérisé en ce que** le traitement thermique met en oeuvre un inducteur (IND) de type solénoïdal disposé autour de la canne.

8. Procédé selon l'une des revendications précédentes, **caractérisé en ce qu'**il comporte en outre une injection de gaz inerte sur la surface externe de la gaine pour éviter une oxydation suite au traitement thermique.

9. Procédé selon l'une des revendications précédentes, **caractérisé en ce qu'**il comporte en outre, après le traitement thermique, une étape de refroidissement par soufflerie de fluide (S) sur la surface extérieure de la gaine.

10. Procédé selon l'une des revendications précédentes, **caractérisé en ce que** le matériau de la gaine est du type acier inoxydable austénitique écroui.

11. Canne chauffante destinée à être mise en service dans un pressuriseur du circuit primaire d'un réacteur nucléaire obtenue par le procédé selon l'une des revendications 1 à 10,
la canne chauffante comportant un organe de chauffage (1) logé dans une gaine (5) sensiblement cylindrique,
ladite gaine comportant une surface extérieure susceptible de subir, au moins en partie, une corrosion sous contrainte, pendant la mise en service de la canne,
ladite gaine comportant un matériau de type acier, **caractérisée en ce que** la gaine (5) de la canne comporte au moins en sa surface extérieure une épaisseur de matériau recristallisé.

12. Canne selon la revendication 11, **caractérisée en ce que** l'épaisseur est supérieure ou de l'ordre de 1 mm.

13. Canne selon l'une des revendications 11 et 12, **caractérisée en ce qu'**elle présente une dureté équivalente à une valeur inférieure ou égale à 240 Vickers.

## Patentansprüche

1. Verfahren zur Behandlung eines in einem Druckerhöher des Primärkühlsystems eines Kernreaktors zu verwendenden Heizleiterrohrs, wobei
das Heizleiterrohr ein Heizelement (1) aufweist, das in einem im Wesentlichen zylindrischen Mantel (5) untergebracht ist,
der Mantel eine Außenfläche aufweist, die anfällig ist, während der Verwendung des Heizleiterrohrs zumindest teilweise eine Spannungskorrosion zu erleiden,
der Mantel ein Material des Stahltyps aufweist,
**dadurch gekennzeichnet, dass** das Verfahren einen Schritt einer thermischen Behandlung zumindest der Außenfläche des Mantels aufweist, um das Material des Mantels zumindest oberflächlich zu rekristallisieren,
und dadurch, dass vor dem thermischen Behandlungsschritt die Außenfläche des Mantels zumindest Spuren einer Kalthärtung hat,
und dadurch, dass die aus der thermischen Behandlung resultierende Temperaturerhöhung des Heizelements auf einen maximalen Wert von 900° begrenzt ist.

2. Verfahren nach Anspruch 1, **dadurch gekennzeichnet, dass** die thermische Behandlung eine von der Außenfläche des Mantels aus angewandte Wärmebehandlung durch Induktion ist.

3. Verfahren nach Anspruch 2, **dadurch gekennzeichnet, dass** die thermische Behandlung eine Temperaturerhöhung an der Außenfläche des Mantels in einem Bereich von 900°C bis 1050°C aufweist.

4. Verfahren nach Anspruch 3, **dadurch gekennzeichnet, dass** eine Frequenz eines in einer Induktionsspule anliegenden Wechselstroms für die Rekristallisationsbehandlung mittels Induktion mindestens 100 kHz ist, für eine die Außenfläche des Mantels umgebende Spule von 30 bis 50 mm Durchmesser, wobei der Durchmesser des Mantels ungefähr 20 bis 25 mm ist.

5. Verfahren nach einem der Ansprüche 3 bis 4, **dadurch gekennzeichnet, dass** ein Induktor (IND) um das Heizleiterrohr angeordnet wird, und dadurch, dass eine relative Verschiebung des Induktors bezüglich des Heizleiterrohrs zumindest in Translation entlang des Heizleiterrohrs angewandt wird.

6. Verfahren nach Anspruch 5, **dadurch gekennzeichnet, dass** für eine durch Induktion eingespeiste Leistung zwischen 1 und 50 kW die Geschwindigkeit der Translation zwischen 100 und 900 mm pro Minute beträgt.

7. Verfahren nach einem der Ansprüche 2 bis 6, **dadurch gekennzeichnet, dass** die thermische Behandlung einen um das Heizleiterrohr angeordneten Induktor (IND) des Solenoid-Typs verwendet.

8. Verfahren nach einem der vorstehenden Ansprüche, **dadurch gekennzeichnet, dass** es ferner ein Zuführen eines Inertgases an die Außenfläche des Mantels aufweist, um eine Oxidation im Anschluss an die thermische Behandlung zu vermeiden.

9. Verfahren nach einem der vorstehenden Ansprüche, **dadurch gekennzeichnet, dass** es nach der thermischen Behandlung desweiteren einen Schritt eines Abkühlens durch Zuführen von Fluid (S) an die Außenfläche des Mantels aufweist.

10. Verfahren nach einem der vorstehenden Ansprüche, **dadurch gekennzeichnet, dass** das Material des Mantels des Typs nicht oxidierender austenitischer kaltgehärteter Stahl ist.

11. Heizleiterrohr, das für eine Verwendung in einem Druckerhöher des Primärkühlsystems eines Kernreaktors vorgesehen ist und mit dem Verfahren nach einem der Ansprüche 1 bis 10 erhalten worden ist, wobei
das Heizleiterrohr ein Heizelement (1) aufweist, das in einem im Wesentlichen zylindrischen Mantel (5) untergebracht ist,
der Mantel eine Außenfläche aufweist, die anfällig ist, während der Verwendung des Heizleiterrohrs zumindest teilweise eine Spannungskorrosion zu erleiden,
der Mantel ein Material des Stahltyps aufweist,
**dadurch gekennzeichnet, dass** der Mantel (5) des Heizleiterrohrs zumindest an seiner Außenfläche eine Dicke eines rekristallisierten Materials aufweist.

12. Heizleiterrohr nach Anspruch 11, **dadurch gekennzeichnet, dass** die Dicke größer als oder in der Größenordnung von 1 mm ist.

13. Heizleiterrohr nach einem der Ansprüche 11 und 12, **dadurch gekennzeichnet, dass** es eine Härte aufweist, die einem Wert kleiner oder gleich 240 Vickers äquivalent ist.

## Claims

1. A method for the treatment of a heating rod intended to be used in a pressurizer of the primary cooling system of a nuclear reactor,
the heating rod comprising a heating device (1) housed inside a substantially cylindrical sheath (5),
said sheath having an external surface that is liable to undergo stress corrosion, at least partially, during the use of the heating rod,
said sheath including a steel-type material,
**characterized in that** the method comprises a heat treatment step of at least the external surface of at least said sheath to recrystallize, at least, the area of the material of the sheath,
and **in that** the external surface of the sheath has at least traces of work-hardening before the heat treatment step,
and **in that** the rise in temperature of the heater resulting from the heat treatment is limited to a maximum value of 900 °C.

2. Method according to claim 1, **characterized in that** the heat treatment uses induction heating applied starting from the external surface of the sheath.

3. Method according to claim 2, wherein the heat treatment includes a rise in temperature on the external surface of the sheath comprised within a range from 900°C to 1,050°C.

4. The method according to claim 3, wherein an inductor coil having a diameter is used and an alternating current frequency applied in the inductor coil for recrystallization treatment using induction heating is at least 100 kHz, for a coil 30 to 50 mm in diameter surrounding the external surface of the sheath, the diameter of the sheath being of the order of 20 to 25 mm.

5. The method according to any of claims 3 to 4, wherein an inductor (IND) is arranged around the substantially cylindrical sheath, and a relative displacement of the inductor with respect to the substantially cylindrical sheath is applied, at least in translation along the substantially cylindrical sheath.

6. Method according to claim 5, **characterized in that** the speed of the translational displacement is comprised between 100 and 900 mm per minute, for a power supplied by induction comprised between 1 and 50 kW.

7. Method according to any of claims 2 to 6, **characterized in that** the heat treatment implements an inductor (IND) of the solenoid type arranged around the tube.

8. Method according to any of the preceding claims, **characterized in that** it includes moreover a supply of inert gas onto the external surface of the sheath in order to avoid oxidation following the heat treatment.

9. Method according to any of the preceding claims, **characterized in that** it includes moreover, after the heat treatment, a step of cooling by blowing (B) fluid onto the external surface of the sheath.

10. Method according to any of the preceding claims, **characterized in that** the material of the sheath is of the work-hardened austenitic stainless steel type.

11. Heater tube for the treatment of a heating rod intended to be used in a pressurizer of the primary cooling system of a nuclear reactor, produced by the method according to any of claims 1 to 10,
the heating rod comprising a heating device (1) housed inside a substantially cylindrical sheath (5),
said sheath having an external surface that is liable to undergo stress corrosion, at least partially, during the use of the heating rod,
said sheath including a steel-type material,
**characterized in that** the sheath (5) of the tube includes at least on its external surface a thickness of recrystallized material.

12. The heating rod according to claim 11, wherein the thickness of the sheath is greater than or of the order of 1 mm.

13. The heating rod according to any of claims 11 to 12, wherein the sheath has a hardness equivalent to a value
